# EUROPEAN PATENT APPLICATION

(11) **EP 3 591 565 A1**
(43) Date of publication of application: **08.01.2020**
(21) Application number: 18181725.5
(22) Date of filing: 04.07.2018
(51) Int. Cl.: G06F 21/79, G06F 3/06, G06F 12/14, G06F 9/455

(54) **COMPUTING DEVICE WITH INCREASED RESISTANCE AGAINST ROWHAMMER ATTACKS**

(71) Applicant: Koninklijke Philips N.V., 5656 AE Eindhoven (NL); Stichting VU, 1081 HV Amsterdam (NL)
(72) Inventor: Konoth, Radesh Krishnan, 5656 AE Eindhoven (NL); Tatar, Andrei, 5656 AE Eindhoven (NL); Oliverio, Marco, 5656 AE Eindhoven (NL); Andriesse, Dennis, 5656 AE Eindhoven (NL); Bos, Hendrik Jaap, 5656 AE Eindhoven (NL); Giuffrida, Cristiano, 5656 AE Eindhoven (NL); Razavi, Kaveh, 5656 AE Eindhoven (NL)
(74) Representative: de Haan, Poul Erik

(57) **Abstract**

Some embodiments are directed to a computing device comprising a volatile memory comprising multiple rows of memory cells, each row of the multiple rows of memory cells having a neighboring row, and a memory mapper configured to map a first plurality of the multiple rows to a safe memory region, and a second plurality of the multiple rows to an unsafe memory region, wherein a row of the first plurality does not have a neighboring row in the first plurality.

## Description

### FIELD OF THE INVENTION

The invention relates to computing device, a swapping method and computer readable medium.

### BACKGROUND OF THE INVENTION

The Rowhammer vulnerability, a defect in DRAM chips that allows attackers to flip bits in memory at locations to which they should not have access, has evolved from a mere curiosity to a serious and very practical attack vector to attack PCs [4], VMs in clouds [24, 31], and mobile devices [29, 9]. Rowhammer allows attackers to flip bits in DRAM rows simply by repeatedly reading neighboring rows in rapid succession. Existing software-based defenses have proven ineffective against advanced Rowhammer attacks [2, 5], while hardware defenses are impractical to deploy to the billions of devices already in operation [19].

Today's defenses are ineffective. Advanced Rowhammer attacks target a variety of data structures, from page table entries [25, 29, 31] to cryptographic keys [24], and from object pointers [4, 9] to opcodes [10]. These target data structures may reside in the kernel [25, 29], in other virtual machines [24], in memory shared between kernel and user space [10], or even in the same process address space [4, 9]. The attacks may originate in native code [25], JavaScript [11, 4], or even DMA devices, or co-processors such as GPUs [9]. The objective of the attacker may be to escalate privileges [29, 4], weaken cryptographic keys [24], or simply lock down the processor in a denial-of-service attack [15].

Existing hardware-based Rowhammer defenses fall into three categories: refresh rate boosting, target row refresh, and error correcting codes. Increasing the refresh rate of DRAM [17] makes it harder for attackers to leak sufficient charge from a row before the refresh occurs, but cannot prevent Rowhammer completely without unacceptable performance loss and power consumption increase. The target row refresh (TRR) defense, proposed in the LPDDR4 standard, uses hardware counters to monitor DRAM row accesses and refreshes specific DRAM rows suspected to be Rowhammer victims. Unfortunately, researchers still regularly observe bit flips in TRR memory [19, 29]. As for error correcting codes (ECC), the first Rowhammer publication already argued that even ECC-protected DRAM is susceptible to Rowhammer attacks that flip multiple bits per memory word [17]. Moreover, ECC memory is unavailable on most consumer devices.

Software defenses do not suffer from the same deployment issues as hardware defenses. These solutions can be categorized into primitive weakening, detection, and isolation.

Primitive weakening makes some of the steps in Rowhammer attacks more difficult, for instance by making it harder to obtain physically contiguous uncached memory [26], or to create the cache eviction sets required to access DRAM in case the memory *is* cached. Research has already shown that these solutions do not fundamentally prevent Rowhammer [9].

Rowhammer detection uses heuristics to detect suspected attacks and refresh victim rows before they succumb to bit flips. For instance, ANVIL uses hardware performance counters to identify likely Rowhammer attacks [2]. Unfortunately, hardware performance counters are not available on all CPUs, and some Rowhammer attacks may not trigger unusual cache behavior or may originate from unmonitored devices [9].

A final, and potentially very powerful defense against Rowhammer is to *isolate* the memory of different security domains in memory with unused *guard rows* that absorb bit flips. For instance, CATT places a guard row between kernel and user memory to prevent Rowhammer attacks against the kernel from user space [5]. Unfortunately, CATT does not prevent Rowhammer attacks between user processes, let alone attacks *within* a process that aim to subvert cryptographic keys [24]. Moreover, the lines between security domains are often blurry, even in seemingly clear-cut cases such as the kernel and user-space, where the shared page cache provides ample opportunity to flip bits in sensitive memory areas and launch devastating attacks [10].

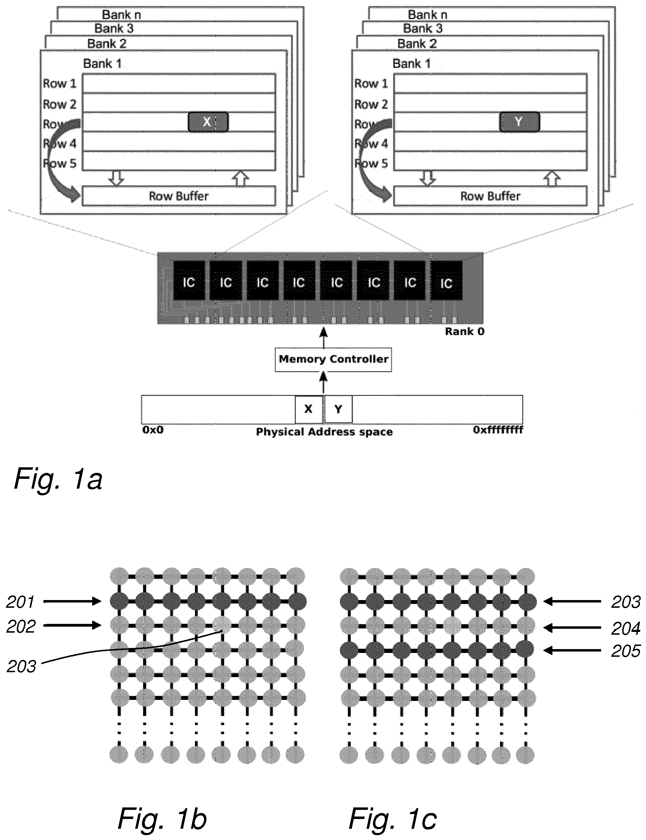

We now discuss how DRAM chips are organized internally, which is important knowledge for launching an effective Rowhammer attack. Fig. 1a illustrates the DRAM organization and an example mapping of two consecutive addresses.

The most basic unit of DRAM storage is a *cell* that can hold a single bit of information. Each DRAM cell comprises two components: a capacitor and a transistor. The capacitor stores a bit by retaining electrical charge. Because this charge leaks away over time, the memory controller periodically (typically every 64 ms) reads each cell and rewrites it, restoring the charge on the capacitor. This process is known as *refreshing.*

DRAM cells are grouped into *rows* that are typically 1024 cells (or *columns*) wide. Memory accesses happen at row granularity. When a row is accessed, the contents of that row are put in a special buffer, called the *row buffer,* and the row is said to be *activated.* After the access, the activated row is written back (e.g., recharged) with the contents of the row buffer.

Multiple rows are stacked together to form *banks,* with multiple banks on a DRAM *integrated circuit (IC)* and a separate row buffer per bank. In turn, DRAM ICs are grouped into *ranks.* DRAM ICs are accessed in parallel; for example, in a DIMM that has eight ICs of 8 bits wide each, all eight ICs are accessed in parallel to form a 64 bit *memory word.*

To address a memory word within a DRAM rank, the system memory controller uses three addresses for the bank, row and column, respectively. Note that the mapping between a physical memory address and the corresponding rank-index, bank-index and row-index on the hardware module is nonlinear. Consequently, two consecutive physical memory addresses can be mapped to memory cells that are located on different ranks, banks, or rows (see Fig. 1a). As explained next, knowledge of the address mapping is vital to effective Rowhammer.

The Rowhammer bug is relevant, e.g., to DRAM chips. As DRAM chips become denser, the capacitor charge reduces, allowing for increased DRAM capacity and lower energy consumption. Unfortunately, this increases the possibility of memory errors owing to the smaller difference in charge between a "0" bit and a "1" bit.

Research shows that it is possible to force memory errors in DDR3 memory by activating a row many times in quick succession, causing capacitors in neighboring *victim* rows to leak their charge before the memory controller has a chance to refresh them [17]. This rapid activation of memory rows to flip bits in neighboring rows is known as the *Rowhammer attack.* Subsequent research has shown that bit flips induced by Rowhammer are highly reproducible and can be exploited in a multitude of ways, including privilege escalation attacks and attacks against co-hosted VMs in cloud environments [4, 23, 24, 26, 29, 30, 24, 30, 12].

Fig. 1b illustrates flipping a bit in a neighboring DRAM row through single-sided Rowhammer attacks. Fig. 1c shows double-sided Rowhammer attacks. The original Rowhammer attack [26] is now known as *single-sided* Rowhammer. As Fig. 1b shows, it uses many rapid-fire memory accesses in one *aggressor* row to induce bit flips in a neighboring victim row. In the example of Fig. 1b, row 201 is known as the aggressor row, e.g., row number k-1. Row 202 is known as the victim row, e.g., row number k. For example, cell 203 in the victim row may flip as a result of hammering the aggressor row 201. A newer variant called *double-sided* Rowhammer hammers rows and on both sides of the victim row, increasing the likelihood of a bit flip (see Fig. 1c). In the example, rows 203 and 205 are the aggressor rows, e.g., row k-1 and k+1, and row 204 is the victim row, e.g. row k. As a result of double-sided rowhammer, a bit in the victim row 204 may flip. Recent research shows that bit flips can also be induced by hammering only one memory address [10] (*one-location* hammering). Regardless of the type of hammering, Rowhammer can only induce bit flips only on directly neighboring DRAM rows. In contrast to single-sided Rowhammer, the double-sided variant requires knowledge of the mapping of virtual and physical addresses to memory rows. Since DRAM manufacturers do not publish this information, this necessitates reverse engineering the DRAM organization.

Various Rowhammer Defenses have been proposed. Research has produced both hardware- and software-based Rowhammer defenses. The original hardware defense proposed by Kim et al. [17] doubles the refresh rate. Unfortunately, this has been proven insufficient to defend against Rowhammer [2]. Other hardware defenses include error-correcting DRAM chips (ECC memory), which can detect and correct a 1-bit error per ECC word (64-bit data). Unfortunately, ECC memory cannot correct multi-bit errors [1, 19] and is not readily available in consumer hardware. The new LPDDR4 standard [16] specifies two features which together defend against Rowhammer : *Target Row Refresh (TRR)* enables the memory controller to refresh rows adjacent to a certain row, and *Maximum Activation Count (MAC)* specifies a maximum row activation count before adjacent rows are refreshed. Despite these defenses, van der Veen et al. still report bit flips on a Google pixel phone with LPDDR4 memory [29].

ANVIL [2], a software defense, uses Intel's performance monitoring unit (PMU) to detect physical addresses that cause many cache misses indicative of Rowhammer. For example, Rowhammer attacks may repeatedly clear hammered rows from the CPU cache to ensure that they hammer DRAM memory, not the cache. It then recharges suspected victim rows by accessing them. Accurately recharging victim rows requires knowledge of the physical to DRAM address mapping, which is not publicly available for all DRAM chips. Moreover, the PMU does not accurately capture memory accesses through DMA, and not all CPUs feature PMUs.

Another software-based defense called CATT [5] proposes an alternative memory allocator for the Linux kernel that isolates user and kernel space in physical memory, thus ensuring that user-space attackers cannot flip bits in kernel memory. However, CATT does not defend against attacks between user-space processes, and previous work [10] shows that CATT can be bypassed by flipping bits in the code of the sudo program.

In 2014, Kim et al. [17] were the first to show that it is possible to flip bits in DDR3 memory on x86 CPUs simply by accessing other parts of memory. Since then, many studies have demonstrated the effectiveness of Rowhammer as a real-world exploit in many systems.

The first practical Rowhammer -based privilege escalation attack, by Seaborn and Dullien [26], targeted the x86 architecture and DDR3 memory, hammering the memory rows by means of the native x86 clflush instruction that would flush the cache and allow high-frequency access to DRAM. By flipping bits in page table entries, the attack obtained access to privileged pages.

Not long after these earliest attacks, researchers greatly increased the threat of Rowhammer attacks by showing that is possible to launch them from JavaScript also, allowing attackers to gain arbitrary read/write access to the browser address space from a malicious webpage [4, 11].

Moreover, newer attacks started flipping bits in memory areas other than page table entries, such as object pointers (to craft counterfeit objects [4]), opcodes [10], and even application-level sensitive data [24].

For instance, Flip Feng Shui demonstrated a new attack on VMs in cloud environments that flipped bits in RSA keys in victim VMs to make them easy to factorize, by massaging the physical memory of the co-located VMs to land the keys on a page that was hammerable by the attacker. Around the same time, other researchers independently also targeted RSA keys with Rowhammer but now for fault analysis [3]. Concurrently, also, Xiao et al. [31] presented another cross-VM attack that manipulates page table entries in Xen.

Where the attacks initially focused on PCs with DDR3 configurations, later research showed that ARM processors and DDR4 memory chips are also vulnerable [29]. While this opened the way for Rowhammer attacks on smartphones, the threat was narrower than on PCs, as the authors were not yet able to launch such attacks from JavaScript. This changed recently, when research described a new way to launch Rowhammer attacks from JavaScript on mobile phones and PC, by making use of the GPU. Hammering directly from the GPU by way of WebGL, the authors managed to compromise a modern smart phone browser in under two minutes. Moreover, this time the targeted data structures are doubles and pointers: by flipping a bit in the most significant bytes, the attack can turn pointers into doubles (making them readable) and doubles into pointers (yielding arbitrary read/write access).

All Rowhammer attacks until that point required local code execution. Recently, however, researchers demonstrated that even remote attacks on servers are possible [27], by sending network traffic over high-speed network to a victim process, using RDMA NICs. As the data the receiving host writes the data to memory by means of DMA, the remote attackers are able to flip bits in the server. By carefully manipulating the data in a key-value store, they show that it is possible to completely compromise the server process.

It should be clear that Rowhammer exploits have spread from a narrow and arcane threat to target two of the most popular architectures, in all common computing environments, different types of memory (and arguably Flash [6]), while covering most common threat models (local privilege escalation, hosted JavaScript, and even remote attacks). Embodiments described herein protect against all of the above attacks.

Kim et al. [17] propose hardware changes to mitigate Rowhammer by increasing row refresh rates or using ECC. These defenses have proven insufficient [2] and infeasible to deploy on the required massive scale. The new LPDDR4 standard [16] specifies two features which together defend against Rowhammer: TRR and MAC. Despite these defenses, van der Veen et al. still report bit flips on a Google pixel phone with LPDDR4 memory [29]. While nobody has demonstrated Rowhammer attacks against ECC memory yet, the real problem with such hardware solutions is that most systems in use today do not have ECC, and replacing all DRAM in current devices is simply infeasible.

In order to protect from Rowhammer attacks, many vendors simply disabled features in their products to make life harder for attackers. For instance, Linux disabled unprivileged access to the *pagemap* [26], Microsoft disabled memory deduplication [8] to defend from Dedup Est Machina attack [4], and Google disabled [28] the ION contiguous heap in response to the Drammer attack [29] on mobile ARM devices. Worryingly, not a single defense is currently deployed to protect from the recent GPU-based Rowhammer attack on mobile ARM devices (and PCs), even though it offers attackers a huge number of vulnerable devices.

Finally, researchers have proposed targeted software-based solutions against Rowhammer. ANVIL [2] relies on Intel's performance monitoring unit (PMU) to detect and refresh likely Rowhammer victim rows. Unlike some of the embodiments described herein it requires hardware support and is prone to false positives. CATT [5] isolates (only) user and kernel space in physical memory so that user-space attackers cannot trigger bit flips in kernel memory. However, research [10] shows CATT to be by-passable by flipping opcode bits in the sudo program code. Moreover, CATT does not defend against attacks that target co-hosted VMs at all [5]. In contrast, embodiments described herein protect against co-hosted VM attacks, attacks against the kernel, attacks between (and even within) user-space processes and attacks from Co-processors such as GPU.

Rowhammer attacks can be exploited in a number of attacks. For example, prior research shows the examples of privilege escalation [4, 23, 24, 26, 29, 30, 12], compromising co-hosted virtual machines [24, 30] or even attacks over the network [27].

The following references are acknowledged
[1] Aichinger, B. DDR Memory Errors caused by Row Hammer. In Proceedings of the 19th IEEE High Performance Extreme Computing Conference (HPEC) (2015).
[2] Aweke, Z. B., Yitbarek, S. F., Qiao, R., Das, R., Hicks, M., Oren, Y., and Austin, T. ANVIL: Software-Based Protection Against Next-Generation Rowhammer Attacks. ASPLOS'16.
[3] Bhattacharya, S., and Mukhopadhyay, D. Curious Case of Rowhammer: Flipping Secret Exponent Bits Using Timing Analysis. CHESS' 16.
[4] Bosman, E., Razavi, K., Bos, H., and Giuffrida, C. Dedup Est Machina: Memory Deduplication as an Advanced Exploitation Vector. SP' 16.
[5] Brasser, F., Davi, L., Gens, D., Liebchen, C., and Sadeghi, A.-R. CAn't Touch This: Software-only Mitigation against Rowhammer Attacks targeting Kernel Memory. SEC'17.
[6] Cai, Y., Ghose, S., Luo, Y., Mai, K., Mutlu, O., and Haratsch, E. F. Vulnerabilities in MLC NAND Flash Memory Programming: Experimental Analysis, Exploits, and Mitigation Techniques. In Proceedings of the Symposium on High-Performance Computer Architecture (2017).
[7] Cooper, B. F., Silberstein, A., Tam, E., Ramakrishnan, R., and Sears, R. Benchmarking cloud serving systems with YCSB. SoCC '10.
[8] CVE-2016-3272. Microsoft Security Bulletin MS16-092 - Important. https://technet.microsoft.com/en-us/library/security/ms16-092.aspx (2016).
[9] Frigo, P., Giuffrida, C., Bos, H., and Razavi, K. Grand Pwning Unit: Accelerating Microarchitectural Attacks with the GPU. In Proceedings of the 39th IEEE Symposium on Security and Privacy (2018).
[10] Gruss, D., Lipp, M., Schwarz, M., Genkin, D., Juffinger, J., O'Connell, S., Schoechl, W., and Yarom, Y. Another Flip in the Wall of Rowhammer Defenses, 2017. arXiv: https://arxiv.org/abs/1710.00551.
[11] Gruss, D., Maurice, C., and Mangard, S. Rowhammer.js: A Remote Software-Induced Fault Attack in JavaScript. DIMVA' 16.
[12] Gruss, D., Maurice, C., and Mangard, S. A cache attack to induce hardware faults from a website. DIMVA.
[13] Hamming, R. W. Error detecting and error correcting codes. Bell Labs Technical Journal 29, 2 (1950), 147-160.
[14] Henning, J. L. SPEC CPU2006 memory footprint. ACM SIGARCH Computer Architecture.
[15] Jang, Y., Lee, J., Lee, S., and Kim, T. Sgx-bomb: Locking down the processor via rowhammer attack. In Proceedings of the 2Nd Workshop on System Software for Trusted Execution (New York, NY, USA, 2017), SysTEX'17, ACM, pp. 5:1-5:6.
[16] JEDEC Solid State Technology Association. Low Power Double Data 4 (LPDDR4). JESD209-4A, 2015.
[17] Kim, Y., Daly, R., Kim, J., Fallin, C., Lee, J. H., Lee, D., Wilkerson, C., Lai, K., and Mutu, O. Flipping Bits in Memory Without Accessing Them: An Experimental Study of DRAM Disturbance Errors. ISCA' 14.
[18] Kurmus, A., Ioannou, N., Neugschwandtner, M., Papandreou, N., and Parnell, T. From random block corruption to privilege escalation: A filesystem attack vector for rowhammer-like attacks. In USENIX Workshop on Offensive Technologies (2017).
[19] Lanteigne, M. How Rowhammer Could Be Used to Exploit Weaknesses in Computer Hardware. http://www.thirdio.com/rowhammer.pdf, March 2016.
[20] Mytkowicz, T., Diwan, A., Hauswirth, M., and Sweeney, P. F. Producing wrong data without doing anything obviously wrong! ASPLOS'09.
[21] Newman, L. H. The hidden toll of fixing meltdown and spectre. WIRED (January 2018).
[22] Pessl, P., Gruss, D., Maurice, C., Schwarz, M., and Mangard, S. DRAMA: Exploiting DRAM Addressing for Cross-CPU Attacks. SEC'16.
[23] Qiao, R., and Seaborn, M. A New Approach for Rowhammer Attacks. In Proceedings of the 9th IEEE International Symposium on Hardware Oriented Security and Trust (HOST) (2016).
[24] Razavi, K., Gras, B., Bosman, E., Preneel, B., Giuffrida, C., and Bos, H. Flip Feng Shui: Hammering a Needle in the Software Stack. SEC' 16.
[25] Seaborn, M., and Dullien, T. Exploiting the DRAM rowhammer bug to gain kernel privileges. http://googleprojectzero.blogspot.com/2015/03/exploiting-dram-rowhammer-bug-to-gain.html, March 2015.
[26] Seaborn, M., and Dullien, T. Exploiting the DRAM Rowhammer Bug to Gain Kernel Privileges. BHUS' 15.
[27] Tatar, A., Krishnan, R., Athanasopoulos, E., Giuffrida, C., Bos, H., and Razavi, K. Throwhammer: Rowhammer Attacks over the Network and Defenses. In Proceedings of the Annual Usenix Technical Conference (2018).
[28] Tjin, P. android-7.1.0_r7 (Disable ION_HEAP_TYPE_SYSTEM _CONTIG). https://android.googlesource.com/device/google/marlin-kernel/+/android-7.1.0_r7 (2016).
[29] van der Veen, V., Fratantonio, Y., Lindorfer, M., Gruss, D., Maurice, C., Vigna, G., Bos, H., Razavi, K., and Giuffrida, C. Drammer: Deterministic Rowhammer Attacks on Mobile Platforms. CCS'16.
[30] Xiao, Y., Zhang, X., Zhang, Y., and Teodorescu, M.-R. One Bit Flips, One Cloud Flops: Cross-VM Row Hammer Attacks and Privilege Escalation. In Proceedings of the 25th USENIX Security Symposium (2016).
[31] Xiao, Y., Zhang, X., Zhang, Y., and Teodorescu, R. One Bit Flips, One Cloud Flops: Cross-VM Row Hammer Attacks and Privilege Escalation. SEC' 16.
[32] WRK2 - a HTTP Benchmarking Tool, 2018.

### SUMMARY OF THE INVENTION

Protecting the entire memory is not secure even in hardware [19, 29] and the software attempts have so far been shown to be insecure [10]. Instead, we aim to design a system where an attacker can only hammer a subset of rows directly. Given the difficulty of correctly delineating security domains, the only *guaranteed* approach to prevent all forms of Rowhammer is to isolate *all* data rows with guard rows that absorb bit flips, rendering them harmless. The drawback of this approach is clear-sacrificing 50% of memory to guard rows is extremely costly. In an embodiment, protection is offered against Rowhammer attacks that isolate everything from everything else without sacrificing memory consumed by guard rows. For example, rather than leaving the guard rows unused, embodiments utilize them to implement a data storage or an efficient swap space in memory. Embodiments use the guard rows to store data with access restrictions. Optionally, the data stored in the guard rows may be integrity-checked and/or compressed. Moreover, the protection can be implemented in software, and could be retrofitted on existing devices.

A computing device is provided comprising
- a volatile memory comprising multiple rows of memory cells, each row of the multiple rows of memory cells having a neighboring row,
- a memory mapper configured to map a first plurality of the multiple rows to a safe memory region, and a second plurality of the multiple rows to an unsafe memory region, wherein a row of the first plurality does not have a neighboring row in the first plurality,
- an operating system configured to allocate pages of the safe region as working memory for one or more applications running on the operating system, and to lower an access frequency for the unsafe region to below an access frequency for the safe region.

In an embodiment, the operating system comprises an access unit, the access being configured to access the unsafe region and to enforce said lower access frequency.

In an embodiment, a computing device is provided comprising
- a volatile memory comprising multiple rows of memory cells, each row of the multiple rows of memory cells having a neighboring row,
- a memory mapper configured to map a first plurality of the multiple rows to a safe memory region, and a second plurality of the multiple rows to an unsafe memory region, wherein a row of the first plurality does not have a neighboring row in the first plurality,
- an operating system configured to allocate pages of the safe region as working memory for one or more applications running on the operating system, and to lower an access frequency for the unsafe region to below an access frequency for the safe region.

Using guard rows as fast, memory-based swap space, significantly improves performance compared to solutions that leave guard rows unused. Embodiments incur an overhead of only 5% on the SPEC CPU 2006 benchmarks. Evaluation shows that in-memory swap space significantly improves performance compared to the naive solution that leaves the guard rows unused, in some cases eliminating over half of the naive solution's performance degradation. A complete protection against all forms of Rowhammer can be obtained without sacrificing memory, at a cost that is a function of the workload.

The computing device is an electronic device, e.g., a computer, a server, a desktop computer, a set-top box, etc. The computing device may be a mobile electronic device, e.g., a laptop, a mobile phone, a tablet, etc.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

### BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,
Fig. 1a schematically illustrates an embodiment of a DRAM organization and an example mapping of two consecutive addresses,
Fig. 1b schematically illustrates flipping a bit in a neighboring DRAM row through single-sided Rowhammer attacks,
Fig. 1c schematically illustrates flipping a bit in a neighboring DRAM row through double-sided Rowhammer attacks,
Fig. 2a schematically shows an example of an embodiment of a computing device,
Fig. 2b schematically shows an example of an embodiment of a computing device,
Fig. 2c schematically shows an example of an embodiment of a computing device,
Figs. 2d.1-2d.4 schematically show examples of an embodiment of a memory divided in a safe and unsafe region,
Fig. 3a schematically illustrates a DRAM address space,
Fig. 3b schematically illustrates a DRAM address space with a zebra pattern,
Fig. 3c schematically illustrates shows the safe region and unsafe region,
Fig. 3d schematically illustrates a swap cache and software,
Fig. 4 schematically illustrates an embodiment of a computing device,
Fig. 5a ZebRAM performance with THP is disabled,
Fig. 5b shows Nginx and Apache throughput at saturation,
Fig. 5c shows Nginx and Apache latency (99% percentile).
Fig. 5d shows Redis throughput at saturation,
Fig. 5e shows Redis latency (99% percentile). The working set size is 50% of RAM (top) and 70% of RAM (bottom),
Fig. 6 schematically shows an example of a swapping method,
Fig. 7a schematically shows a computer readable medium having a writable part comprising a computer program according to an embodiment,
Fig. 7b schematically shows a representation of a processor system according to an embodiment.

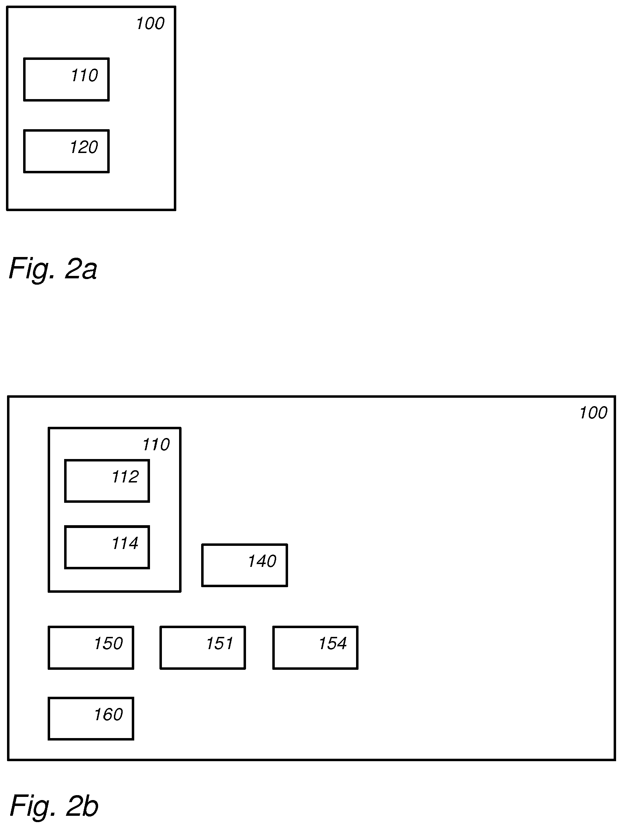

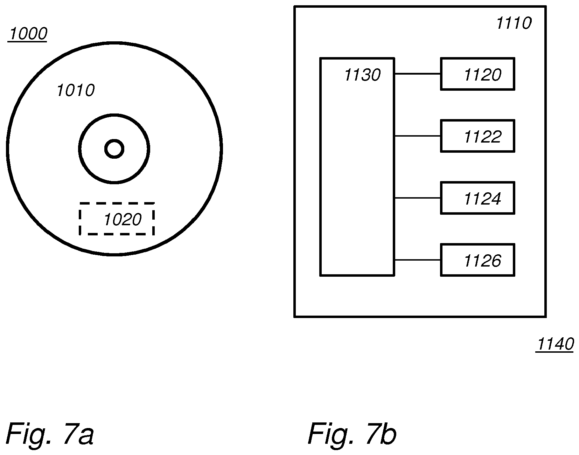

### List of Reference Numerals in figures 2a-2d, 7a-7b:

- 100: a computing device
- 110: a memory
- 120: a processor
- 112: a safe region
- 114: an unsafe region
- 140: a memory mapper
- 150: an operating system
- 151: an access unit
- 152: a swap cache
- 154: an integrity unit
- 156: a compression unit
- 160: an application
- 170: a further swap
- 181: a row in the safe region
- 182: a row in the unsafe region
- 1000: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF THE EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

Fig. 2a schematically shows an example of an embodiment of a computing device 100. For example, computing device 100 may be a computer, e.g., a desktop computer, a server, a laptop, netbook, or the like. Computing device 100 may be a mobile device, e.g., a mobile phone, a PDA, etc. Computing device 100 may be a smart card, set-top box, television, etc.

Computing device 100 comprises a memory 110. Memory 100 is a volatile memory and is vulnerable to rowhammer type attacks. For example, memory 100 may comprise multiple rows of memory cells, each row of the multiple rows of memory cells having a neighboring row. Errors, e.g., bit flips, can be induced by repeatedly accessing, e.g., reading and/or writing, a neighboring row of the memory. For example, memory 110 may be a DRAM memory. Computing device may have additional memory, e.g., non-volatile memory, e.g., ROM memory, and/or volatile memory which is not vulnerable to rowhammer-type attacks.

Computing device 100 comprises a processor 120 to implement methods according to an embodiment. For example, memory 110 may store computer instructions arranged for execution by the processor. This is not necessary however; for example, computing device 100 may comprise a storage interface configured to access computer code, e.g., operating system code and/or memory mapper code. The processor may be configured to access the operating system code and/or memory mapper code through the storage interface and to execute said code. The storage interface may be an interface to local storage, e.g., a local memory, a hard disk, etc., or to non-local storage, e.g., a cloud storage. Memory 110 may comprise data on which the processor acts.

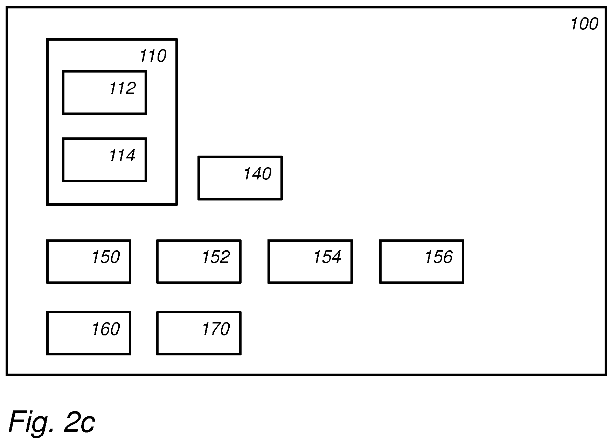

The operation of the computation device in various embodiments may be implemented in a processor, e.g., a processor circuit, examples of which are shown herein. Some of the figures below show functional units that may be functional units of the processor. For example, Fig. 2b or 2c may be used as a blueprint of a possible functional organization of the processor. The processor circuit is not shown separate from the units in Fig. 2b or 2c. For example, the functional units shown in the figures may be wholly or partially implemented in computer instructions that are stored in the memory of the device, e.g., in an electronic memory of the device, and are executable by a microprocessor of the device. In hybrid embodiments, functional units are implemented partially in hardware, e.g., as coprocessors, e.g., memory mappers, and partially in software stored and executed on the device. The processor may comprise multiple sub-processors, which together form the processor. For example, the processor may comprise multiple processor circuits.

Computing device 100 may comprise additional hardware and/or software elements, depending on the application of computing device 100. For example, computing device 100 may comprise a communication interface for communication over a computer network, or a display interface, for displaying computation results on a display connectable to computing device 100.

Figs. 2b and 2c schematically shows an example of an embodiment of a computing device 100. For example, the computation device of Fig. 2b or 2c may be implemented on hardware such as illustrated in Fig. 2a.

Figs. 2b and 2c show memory 110 and a memory mapper 140. Memory mapper 140 is configured to map a first plurality of the multiple rows to a safe memory region, and a second plurality of the multiple rows to an unsafe memory region, wherein a row of the first plurality does not have a neighboring row in the first plurality. An effect of this partitioning is that hammering in the safe region does not cause a bit error in the safe region; or at worst which significantly reduced probability. Assigning rows to regions may be done during a set-up phase of the computing device, e.g., during a boot-phase of the computing device, e.g., after power-up of the computing device.

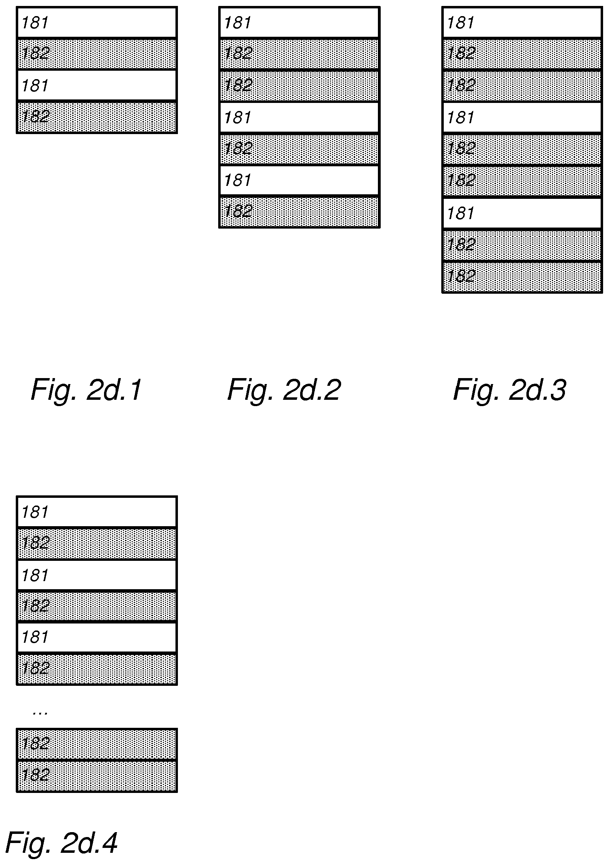

Figs. 2d. 1-2d.4 show various ways in which the rows of memory 110 may be partitioned into a safe and an unsafe region. In these figures, a row marked 181 is assigned to the safe region, and a row marked 182 is assigned to the unsafe region. A row assigned to the safe region will be called a safe row, whereas a row assigned to the unsafe region will be called an unsafe row.

Fig. 2d.1 shows a configuration in which rows are alternately assigned to the safe region. For example, even rows of memory 110 may be mapped to one of the safe region and the unsafe region, and the odd rows of the memory are mapped to the other of the safe region and the unsafe region. Fig. 2d.1 shows the first row, or the top row, to be in the safe region, but this is not necessary. Generally speaking the first row may be in the unsafe region instead. The pattern of Fig. 2d.1 continues as shown. An advantage of the pattern shown in Fig. 2d.1 is that the size of the safe region is maximized. This particular pattern is called a zebra pattern.

Fig. 2d.2 shows that between two safe rows there may be multiple unsafe rows. For example, this may be used to disturb the mapping between safe and unsafe row, so that an attacker does not know in advance which rows are part of which region. For example, it may be decided at random whether between two safe rows, there are 1 or 2 unsafe row. This may be done dynamically, e.g., by the memory mapper, e.g., at boot-time of the computing device, or statically, e.g., at compile time of, say, the operating system.

For example, this may be used to isolate some safe row more safely from unsafe rows than others. For example, there may be one or more safe rows so that neither the neighboring rows of said row, nor neighboring rows of said neighbors are in the safe region. This may be used to isolate parts of the memory that are particularly security sensitive, e.g., memory comprising permissions, cryptographic keys, and the like.

For example, the multiple rows of memory cells may comprise a first row, a second row neighboring the first row, and a third row neighboring the second row, the third row being different from the first row, the safe region comprising the first row but not the second and third row.

Fig. 2d.3 shows a configuration in which two unsafe rows are between each two safe rows. Although unlikely, it may be possible that an access to a row could trigger bit-errors that are further removed than the neighboring row. In Fig. 2d.3 each safe row is followed by two unsafe rows, which is followed by a safe row, etc.

Fig. 2d.4 shows that at some point in the memory, there may be a set of multiple consecutive unsafe rows. For example, a portion of the memory, say at the beginning or end of the memory, or in the middle, a portion may be marked as unsafe. As a result the size of the swap space (see below) may be increased. Part of the unsafe region may be used for other purposes than swap space. For example, part of the unsafe region may be used for non-sensitive data. For example, a non-sensitive region may be allocated in the unsafe region. The non-sensitive region comprises only rows that do not neighbor a safe row. For example, as shown in Fig. 2d.4 part of the unsafe region may neighbor the safe region, part of the unsafe region may not, in case of Fig. 2d.4 this is the bottom part of the figure. For example, the non-sensitive region may be consecutive rows, possibly shielded from the safe region by a guard row. The guard row may be part of the unsafe region, and may be part of the swap space there. Hammering the non-sensitive region may case errors in the non-sensitive region as well as in the rest of the unsafe region, but not in the safe region. The non-sensitive region may be exposed by an operating system, e.g., as memory or as a block device. In an embodiment, the operating system and/or the memory mapper may be configurable with different sizes of the safe and unsafe region, as well as different sizes of a swap space and/or non-sensitive region. In an embodiment, the non-sensitive region may be used to store, e.g., integrity information.

For simplicity, we will assume that the embodiment use the zebra pattern. However, any embodiment with the zebra pattern may be modified to use a non-zebra pattern, e.g., as shown in Figs. 2d.2-2d.4.

Returning to Figs. 2b and 2c. Memory mapper 140 may map the safe region and/or the unsafe region to a contiguous address space. For example, this has the effect that the memory appears to have two regions, each of which can be contiguously addressed, such that writing to the safe region will not cause rowhammer-type errors in the safe region. Memory mapper 140 may be implemented, e.g., in a hypervisor or bootloader of computing device 110. In Figs. 2b and 2c, the safe region of memory 110 is schematically marked 112, and the unsafe region as 114. The safe and unsafe regions may both be organized into pages, as is conventional in operating system design.

An embodiment may have multiple memory mapping units. For example, an embodiment may comprise a primary memory mapper configured to map a first plurality of the multiple rows to a safe memory region, and a second plurality of the multiple rows to an unsafe memory region, wherein a row of the first plurality does not have a neighboring row in the first plurality. For example, the primary memory mapper may be configured in a hypervisor or the like. An embodiment may have a secondary memory mapper, e.g., to further map memory that is provided by the primary memory mapper. For example, a secondary memory mapper may be configured to assign new memory address to a memory, allocate parts, e.g., pages, of memory, e.g., of pages, of safe and/or unsafe regions to applications and/or daemons, etc., e.g., to applications and/or swap space, buffer space, etc. A secondary memory mapper may be restricted to allocate parts of the safe region only

Computing device 100 comprises an operating system 150. Operating system 150 may be configured to allocate pages of the safe region as working memory for one or more applications running on the operating system. For example, computing device 100 may comprise one or more applications 160 which may use all or part of the safe region 112 as working memory. Note that this may involve a further mapping. The address space seen by application 160 need not be the same as produced by memory mapper 140, e.g., as visible by operating system 150. Application 160 does not have direct access to unsafe region 114; access to unsafe region 114 caused by application 160 may involve the operating system, e.g., to enforce a lower access frequency in the unsafe region. Application 160 does not need to be given access to the full safe region 112. For example, only part of safe region 112 may be allocated to an application, and only a part of that may be allocated to application 160. How much memory, e.g., how many pages, to allocate to different application may be arranged by operating system 150, e.g., using conventional algorithms. Although the application is free to write to the safe region, this will not cause an error in the safe region. Thus, an application in user space cannot perform an attack on the safe region. Various countermeasures are possible to ensure that attacks on the unsafe region are not possible either. As one approach, to avoid attacks altogether, one could arrange that the unsafe region is not used at all. This would stop attacks, however it would cost 50% of the memory.

However, in embodiments the unsafe region is used to store data. Note that like in the safe region, access to the unsafe region cannot cause errors in the unsafe region. By ensuring that the access frequency in the unsafe region is lower, rowhammer attacks on the safe region by accessing the unsafe region are avoided. For example, the access frequency in the unsafe region may be below a rowhammer threshold. The rowhammer threshold depends on the type of memory, and may be determined experimentally.

This leaves the possibility that writing in the safe region may cause errors in the unsafe region. There are several approaches possible to handle this. One is to accept this possibility, and to use the unsafe region only for non-sensitive data. An example of non-sensitive data may be, e.g., a media buffer, e.g., an audio and/or video buffer, e.g., for a content streaming application 160. Hammering on the safe region may cause errors in the unsafe region, but in this example, this will at worst cause glitches in the audio and/or video playback. Another approach is to compute, e.g., integrity data. For example, data stored in the unsafe region may only be used if the integrity data has been verified and/or applied.

Computing device 100 shown in Fig. 2b comprises an access unit 151 and optionally an integrity unit 154.

Access unit 151 is configured to access unsafe region 114, e.g., read and/or write access. For example, application 160 may send a request, e.g., through an API, e.g., an operating system API, e.g., through a system library, to store data in unsafe region 114, and/or to later retrieve the stored data. Access unit 151 is configured to lower the access frequency for the unsafe region, e.g., compared to the access frequency of the safe region 112. Thus, the part of the memory corresponding to the unsafe region may be arranged so that it is accessed with a lower access frequency that would natively be supported by the memory, and which, e.g., could be supported by the safe region. The lower access frequency makes rowhammer attacks on the safe region through access in the unsafe region harder, or even impossible. The lower the access frequency is forced to be, the more the risk of this rowhammer attack angle is reduced.

For example, in an embodiment, a read or write access request to access unit 151 comprises an interval of the unsafe region which is to be copied form or copied to an interval in the safe region, e.g., transferred. After data is transferred it may or may not be removed or cleaned at the source. The access unit 151 will execute the transfer of data to or from the unsafe region but will impose a waiting time. The waiting time may be executed before or after performing the copy. In an embodiment, the waiting time is performed before performing the copy. In an embodiment, the waiting time may be reduced for larger access request. For example, the waiting time may be computed so that the waiting time plus the time to copy the memory is at least a minimum size. For very large data transfers, the waiting time may even be reduced to zero. In an embodiment, a constant waiting time may be used. In an embodiment, the waiting may, e.g., be 65 ms; in an embodiment the combined waiting time and transfer time may be at least 65 ms. The exact waiting time depends on the required protection against row hammer and the vulnerability of the memory.

Access unit 151 may be part of a single operating system, but may also be used in the combination of a host and one or more guest operating systems. In the latter case, the access unit could be implemented in the host operating system. In that case, the access unit may receive requests from multiple guest operating systems. The access unit could be implemented in one or more or all of the guest operating systems. In an embodiment, access unit 151 may accept requests from multiple application 160. For example, the (host) operating system may export the unsafe region as a memory region or as a block device. The lower access frequency may be enforced by the host operating system or by the guest operating system.

If the access unit serves multiple sources of access requests, whether from multiple applications 160 or from multiple guest operating systems, the access unit may be configured to serialize the accesses to that the waiting time for each access may be enforced. Access unit 160 may cooperate with the operating system to enforce other restrictions, e.g., so that data stored by a particular application and/or by a particular guest operating system can only be accessed by that particular application and/or by that particular guest operating system.

The operating system and/or the host operating system may expose all or part of the unsafe region only to those applications and/or guest operating systems that can enforce the lower access frequency.

A waiting time is option. For example, in an embodiment, the access unit may enforce a minimum access granularity. For example, the access unit may only allow access for an interval of a minimum size. For example, the access unit may only allow access for an interval that is a multiple of a minimum size. For example, the minimum size may be a page. Minimum access size and/or access granularity may be combined with a waiting time. In the latter case the waiting time may be chosen lower.

In an embodiment, computing device 100 of Fig. 2b may comprise an integrity unit 154. Integrity unit 154 is configured to
- compute integrity information for data, e.g., a page, when transferring the data, e.g., the page from the safe region to the unsafe region, and storing the integrity information, and
- retrieve the integrity information for data, e.g., a page when transferring the data, e.g., the page from the unsafe region to the safe region, and verifying the integrity information.

Allowing access only for an integral multiple of pages makes it easier to store integrity information, since in this case the integrity information may be stored for integral pages only. Variants, implementation and embodiments of integrity unit 154 are described with reference to Fig. 2c in the context of swapping. For example, integrity information may comprise a checksum and/or error correction information. For example, integrity information may be stored in the safe region.

Turning now to Fig. 2c. Fig. 2c uses at least part of the unsafe region as a swap space. The computing device 100 shown in Fig. 2c does not need an access unit. Access to the unsafe region may be delayed by other means, e.g., a swap cache, the computation of integrity information, and/or address randomization (see below). However, it is possible in an embodiment to use part of the unsafe region for data storage, e.g., through an access unit and part of the unsafe region as swap space. For example, an access unit may be used only for part of the unsafe region which is not used as swap space.

Pages of the application code and/or data may and/or of the system code and/or data may be allocated in the safe region, may be swapped-out in the unsafe region or may be stored in a further storage, either in regular storage or swap storage, etc.

Interestingly, operating system 150 is configured to allocate all or part of the pages of the unsafe region as swap space for swapping-out pages of the working memory. This has several advantages.

First of all, none of the memory needs to remain unused. Second, most of the activity in a memory is done in relatively few pages, by swapping-in or out pages with activity as needed, relatively few swapping is needed; thus only modest performance loss is achieved. For example, the operating system may be configured with page replacement policies to determine which pages of the safe region should be evicted to the swap space in the unsafe region. The page replacement policies may be algorithms such are conventionally used to swap memory to a hard-disk, or a ram disk, or the like. For example, the operating system may be configured to evict a page of the safe region to the unsafe region according to a Least Recently Used (LRU) algorithm. Swapping-in may be done as needed, e.g., when a read or write to a swapped-out page occurs. Part of the data in the safe region may be protected from swapping out, e.g., system software, operating system software, swap caches, swap administration, real-time software, and the like.

To protect the unsafe region from attack there are several possibilities. For example, one may use a swapping cache between the safe and unsafe region, integrity information, compression, and/or address randomization. Any combination of these is also possible.

In an embodiment, computing device 100 may comprise an integrity unit 154. Integrity unit 154 is configured to
- compute integrity information for a page when swapping-out the page from the safe region to the unsafe region, and storing the integrity information, and
- retrieve the integrity information for a page when swapping-in the page from the unsafe region to the safe region, and verifying the integrity information.

For example, the integrity information may be stored in the unsafe region, or in the safe region. The latter is preferred as it avoids tampering with the integrity information. The integrity information may also be stored in yet further storage, e.g., a further memory, hard disk or the like. Especially if a strong checksum is used, the risk of storing the checksum in the unsafe region is reduced; although this would expose the checksum to bit errors through hammering, the probability that a valid new checksum is obtained corresponding to a page with one or more introduced errors, is small.

The integrity information may comprise a checksum of the swapped page. For example, the checksum, e.g., a hash, the checksum may be a cryptographic checksum such as a cryptographic hash. Preferably, it is unlikely to find two different pages with the same checksum. The integrity information may comprise, e.g., instead or in addition, error correcting information, e.g., according to an error correcting code, sometimes referred to as redundancy information. For example, when a page is swapped out the integrity information may be computed and stored, e.g., associated with the page, e.g., with an address of the page. When the page is swapped back in, the integrity information may be applied. For example, the error correcting information (if any) may be applied to correct one or more bit-errors in the page. For example, the checksum (if any) may be verified. If the checksum is incorrect, the page swap-in may be refused. In the situation an alarm signal may be generated. For example, a swap error may be reported to the operating system. If both error correcting information and a checksum is used, then preferably, the checksum is applied after applying the error correcting information.

In an embodiment, computing device 100 may comprise a swap cache 152. For example, the swap cache 152 may be allocated in the safe region. The swap cache is used as an intermediate storage while swapping-out a page. For example, the operating system may be configured to
- select a page of the safe region for swapping-out to the unsafe region,
- storing the selected page in the swap cache,
- if the swap cache is full, swapping-out the least recently added page from the swap cache to the unsafe region.

Pages in the swap-cache that have been stored in the swap area, e.g., in the unsafe region, may be removed from the swap cache. However, removing pages from the swap cache may be postponed until the swap cache is full or until swapping is scheduled. For example, in an embodiment, the operating system may be configured to
- select a page of the safe region for swapping-out to the unsafe region,
- storing the selected page in the swap cache,
- if the swap cache is full, removing pages that have already been stored in the swap are, and if not pages are already stored in the swap-area swapping-out the least recently added page from the swap cache to the unsafe region.

A timing mechanism may be used to occasionally write pages from the cache to the swap-out region, even if the cache is not yet full. For example, the timing mechanism may be used to write-out a page to the swap area after a set period of time. If it turns out that a swapped-out is needed and is still in the cache, the page may be written back form the cache to the safe region, e.g., to a use-part of the safe region. The use-part of the safe region is used as memory for software, e.g., for system software, the operating system(s) and/or for applications, etc.

An advantage of having a cache is that it introduces a waiting time between the moment a page is selected for swapping-out and the actual writing out of that page in the unsafe region. Writing a page to the unsafe region could potentially introduce a bit-error in the safe region. By having a cache, hammering of the unsafe region through swapping-out pages is avoided.

In an embodiment, computing device 100 comprises a compression unit 156. The compression unit is configured to
- compress a page when swapping-out the page from the safe region to the unsafe region,
- decompress a page when swapping-in the page from the unsafe region to the safe region.

Compressing pages has the advantage that the size of the pages as written in the unsafe region no longer need to be multiples of the page-size. As a result, the address at which a swapped-out page is stored in the swap-out region becomes more variable and thus less predictable. Especially, when the system is also used by applications that are not under the control of the attacker, the compression of pages makes addressing of the pages in the unsafe region less predictable. Furthermore, compression makes more effective use of the swap space, as more pages can be swapped into the unsafe region. Interestingly, this effectively means that more pages can be stored in the unsafe region than would fit in the safe region.

In an embodiment, the swap cache may be located in the safe region, but other storage may also be used, e.g., a further memory, etc.

In an embodiment, the location, e.g., the physical addresses, at which a swapped out page is written in the unsafe region is at least partly random. For example, a random location for a swapped out page may be selected from among free pages in the unsafe region. For example, in an embodiment, the operating system keeps at least part of the swap area empty so that address randomization is more effective. For example, a predetermined amount of swap space, e.g., 10% of the swap space, may be kept free. For example, the operating system may use a further swap 170 to facilitate swapping out excess pages from the swap space in the unsafe region. For example, the operating system may comprise a random number generator. For example, the random number generator may compute a random address in the unsafe region, and the operating system may select the first free memory available after the random address. The location of swapped out pages may be administrated in a table, e.g., as is usual. Randomization of addresses has the effect that hammering in the unsafe region through swapped out pages becomes more difficult. Randomization increases even in effectiveness when it is combined with compression.

In an embodiment, the integrity information and/or compression is computed at the moment a page is moved from the swap cache to the unsafe region. If error correction and/or checksums are used they may be computed before compression and applied after decompression. If a swap page is still present in the cache, when it needs to be swapped in this can be done immediately without decompression or using the integrity information, if the cache is in the safe region or on a trusted further storage. For example, in an embodiment to swap out a page A, the page may first be stored in the swap cache. When page A is written from the swap cache to the unsafe region, error correction data is computed *A_{g}* = *ECC_Enc*(*A*) and/or a checksum *A_{c}* = *Cheeksum*(*A*) and/or a compression *A_{compress}* = *Compress*(*A*). Next *A_{compress}* is stored in the unsafe region. The integrity information *A_{g}* and *A_{c}* may be written in the unsafe region as well, but in an embodiment they are stored in the safe region or even in yet further storage. If no compression is used, then A is stored in the unsafe region instead of *A_{compress}*. When page A is swapped back into the safe region, and is not present in the swap cache anymore, then first *A_{compress}* is uncompressed to obtain *A'*. There is a chance that *A'* is not the same as A due to hammering in the safe region. Next the error correction information *A_{g}* is retrieved and applied. The result is *A"*. The checksum *A_{c}* is retrieved and verified for *A"*. If the checksum is correct the swap-in may proceed, and *A"* may be written back to the safe region. The swap administration may be updated, to reflect that page A is no longer in the swap space and/or swap cache. If an uncorrectable error is found, e.g., through the checksum or through the error correction, a swap error may be generated, and, e.g., reported to the operating system.

An advantage of various embodiments is that the unsafe region is turned into highly efficient swap space, while the majority of computations are performed on a relatively small working set of pages in the safe region. Thus, a relatively small penalty is incurred by protection against rowhammer. The operating system may employ further swap space. For example, in an embodiment, the operating system may comprise a swap interface configured to access a further swap space. The operating system may be configured to prioritize the swap space in the unsafe region over the further swap space. A swap space made out of the same memory in the unsafe region as the working memory in the safe region is likely to outperform swap space on other media, e.g., hard disks, even with the added overhead of one or more of integrity information and compression.

In an embodiment, the operating system is configured to access the swap space only with minimum-sized reads, e.g., page-granular reads during caching operations. This gives further protection against hammering a particular row. During set-up, e.g., during a boot-phase, e.g., to format the swap space or the like, this configuration may be temporarily lifted. Furthermore, parts of the unsafe region may be used to store administration information, e.g., integrity information; those parts may be configured differently as well. For example, part of the unsafe region may be configured to only be accessible with page-granularity, and part may be accessible with a lower granularity. The former may be used for as swap-space. To better enforce page-granularity an embodiment might not use compression. The minimum size read need not be the page-size, but may be smaller, e.g., half a page-size, etc. In an embodiment, the minimum size is at least 2 rows, at least 4 rows, etc. There are various ways in which the operating system of computing device 100 may be organized. For example, the operating system may comprise a host operating system and one or more guest operating system. A guest operating system may be configured to use the unsafe region as swap space. For example, the host operating system may be used for virtualization. The swap space in the unsafe region may be exposed to one or more of the guest operating systems. In an embodiment, no use is made of guest operating systems; for example, the operating system may be monolithic. The operating system may comprise the memory mapper or may use an additional element configured as memory mapper. For example, a hypervisor or bootloader may be configured as memory mapper.

A hypervisor or virtual machine monitor (VMM) is computer software, firmware or hardware that creates and runs virtual machines. A hypervisors may be configured to run software in a closed environment. Guest ram may be allocated by the hypervisor for said software. A computer on which a hypervisor runs one or more virtual machines is called a host machine, and each virtual machine is called a guest machine. The hypervisor may present the guest operating systems with a virtual operating platform and may manage the execution of the guest operating systems. Multiple instances of a variety of operating systems may share the virtualized hardware resources: for example, Linux, Windows, and macOS instances can all run on a single physical x86 machine. Host memory may be allocates as guest memory, e.g., guest RAM. The latter may be done at guest creation time.

The operating system may expose the unsafe region to the guest operating system in various ways. For example, the host operating system may expose at least part of the unsafe region to the guest operating system as a contiguous memory block and/or as a block device.

In an embodiment, the operating system allows access to the safe region without interposition. In particular, part of the safe region may be exposed by the host operating system to a guest operating system. The guest operating system may then use the memory in the safe region for application.

Advantageous computing devices include: A computing device comprising
- a volatile memory comprising multiple rows of memory cells, each row of the multiple rows of memory cells having a neighboring row,
- a memory mapper configured to map a first plurality of the multiple rows to a safe memory region, and a second plurality of the multiple rows to an unsafe memory region, wherein a row of the first plurality does not have a neighboring row in the first plurality,
- an operating system configured to allocate pages of the safe region as working memory for one or more applications running on the operating system and to allocate pages of the unsafe region as swap space for swapping-out pages of the working memory.

For example, the operating system may be configured to compute integrity information for a page when swapping-out the page from the safe region to the unsafe region, and storing the integrity information, and to retrieve the integrity information for a page when swapping-in the page from the unsafe region to the safe region, and verifying the integrity information. For example, a host operating system may expose at least part of the unsafe region to the guest operating system as a contiguous memory block and/or as a block device. For example, the operating system may allow access to the safe region without interposition.

Below a series of further embodiments are described that are collectively referred to as 'ZebRAM'. The latter refers to the zebra-like arrangement of the memory in safe and unsafe rows. Any of the embodiment of the zebram series may be adapted to other arrangements of the memory, e.g., as illustrated in Figs. 2d.1-2d.4. In particular, a prototype is described which was implemented on top of the Linux.

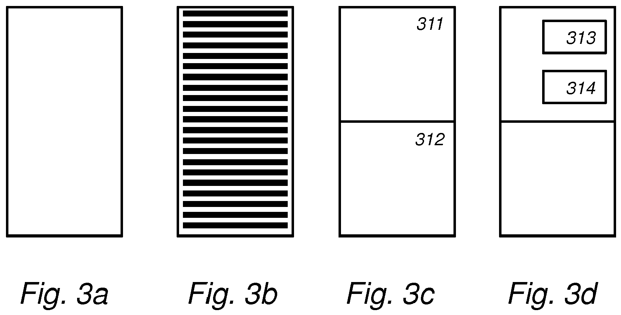

To build a comprehensive solution against Rowhammer attacks, we consider Rowhammer 's fault model: bit flips only happen in adjacent rows when a target row is hammered as shown in Fig. 3. Given that any row can potentially be hammered by an attacker, all rows in the system can be abused. In order to make sure that Rowhammer bit flips cannot target any data, we could enforce the invariant that all *adjacent rows are unused.* This can be done by making sure that either all odd or all even rows are unused by the system. Assuming odd rows are unused, all even rows will create a *safe region* in memory; it is not possible for an attacker to flip bits in this safe regions because all the odd rows are inaccessible to the attacker. The attacker can, however, flip bits in the odd rows by hammering the even rows in the safe region. Hence, we call the odd rows as the *unsafe region* in memory. Given that the unsafe region is unused, the attacker cannot flip bits in the data used by the system. This design with its zebra pattern already stops all Rowhammer attacks; it is referred to herein as the 'strawman design'. The strawman design however has an important downside: it wastes half of the memory that makes up the unsafe region. A more subtle downside is its incompatibility with the Buddy page allocation scheme used in commodity operating systems such as Linux. Buddy allocation uses contiguous regions of physical memory in order to operate efficiently and forcing the system not to use odd rows does not satisfy this requirement. Ideally, our design should utilize the unsafe region while providing a contiguous physical address space for efficient buddy allocation.

Fig. 3a schematically illustrates a DRAM address space. Fig. 3b shows the DRAM address space with a zebra pattern. Fig. 3c shows the safe region (311, top) and unsafe region (312, bottom) as a contiguous physical address space for efficient buddy allocation. Fig. 3d shows the memory divided into a safe region (top) for normal use, a swap space made from the unsafe region (bottom). In the safe region a swap cache 313 is allocated to protect the safe region from accesses made to the unsafe region. In the safe region software 314 may be stored, e.g., operating system software and application software. Parts of the operating system software and/or application software that may be swapped out may be swapped-out to unsafe region 312.

In ZebRAM embodiments a way is found to securely use the unsafe region, so that we can gain back the memory wasted in the strawman design. Preferably, we enforce two invariants if we want to make use of the unsafe region for storing data. First, we need to make sure that we properly handle potential bit flips in the unsafe region. Second, we need to ensure that accessing the unsafe region does not trigger bit flips in the safe region. To support memory management of commodity operating systems, our design may provide a translation mechanism that creates a linear physical address space out of the safe region. Our proposed design, ZebRAM, shown in Figs. 3b-3d has all of these features. To handle bit flips in the unsafe region, ZebRAM performs software integrity checks and error correction whenever data in the unsafe region is accessed. To protect the safe region from accesses to the unsafe region, ZebRAM uses a cache in front of the unsafe region. This cache is allocated from the safe region and ZebRAM is free to choose its size and replacement policy in a way that protects the safe region. Finally, to provide backward-compatibility with memory management in commodity systems, ZebRAM can employ translation mechanisms provided by hardware, e.g., virtualization extensions in commodity processors, to translate even rows into a contiguous physical address space for the guest.

To maintain good performance, ZebRAM ensures that accesses to the safe region proceed without interposition. As mentioned earlier, this can potentially cause bit flips in the unsafe region. Hence, all accesses to the unsafe region may be interposed for bit flip detection and/or correction. To this end, ZebRAM exposes the unsafe region as a swap device to the protected operating system. With this design, ZebRAM reuses existing page replacement policies of the operating system to decide which memory pages should be evicted to the swap e.g., the unsafe region. Given that most operating systems use a Least Recently Used (LRU), the working set of the system remains in the safe region, preserving performance. Once the system needs to access a page from the unsafe region, the operating system selects a page from the safe region, e.g., based on LRU, and creates necessary metadata for bit flip detection and/or correction using the contents of the page and writes it to the unsafe region. At this point, the system can bring the page to the safe region from the unsafe region. But before that, it uses the previously calculated metadata to perform bit flip detection and/or correction. Note that the swap cache may be part of the safe region and may be treated as such by ZebRAM. The swap cache protects the safe region by imposing a rate-limitation on writing to the unsafe region. Furthermore, an advantage of the swap cache in the safe region is that pages that are still in the swap cache can be swapped-in without decompression and/or applying integrity data.

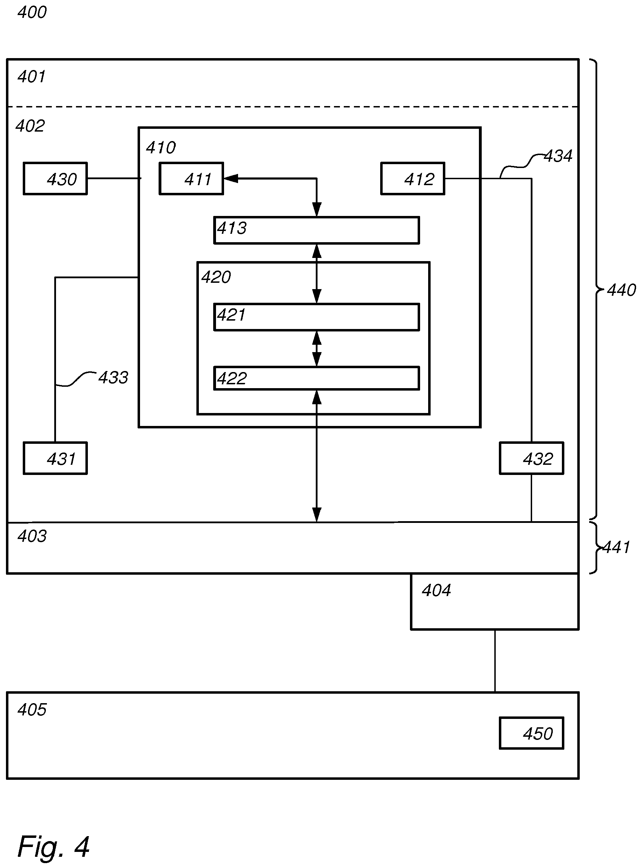

Next, we discuss our implementation of ZebRAM 's design before analyzing its security guarantees and evaluating its performance. Fig. 4 schematically illustrates an embodiment of a computing device 400 according to a ZebRAM embodiment and its components.

Computing device 400 has a memory divided into a safe region 440 and an unsafe region 441. Unsafe region 441 may be used as Swap Space 403. Safe region 440 comprises a user space 401 and a kernel space 402. Kernel space 402 comprises a ZebRAM Block Device 410, e.g., implemented as a Loadable Kernel Module (LKM), e.g., a Linux LKM. Block device 410 may interface with a swap deamon 430, e.g., Linux Kswapd. Kernel space 402 may further comprise a cache layer 431 and a swap manager 432. Swap manager 432 may also be implemented as a loadable kernel module. Block device 410 may comprise a cache manager 411, a memory allocator 412, compression/decompression unit 413, and an integrity manager 420. Integrity manager 420 may comprise a hash generation/verification unit 421 and an ECC Encode/Decode unit 422. For example, memory allocator 412 may allocate/free pages 434. For example, cache manager 411 may manage 433 cache layer reads and writes. Furthermore, cache manager 411 may manage the reading and writing of pages, by applying compression/decompression unit 413, hash generation/verification unit 421 and ECC Encode/Decode unit 422. Fig. 4 further shows a guest RAM 404, a hypervisor 405. Hypervisor 405 comprises a memory mapper 450. For example, memory mapper 450 may set up the guest ram 404. A prototype of ZebRam was implemented by modifying a Linux kernel, this is however not necessary. Memory mapper 450 is an example of a memory mapper configured to map a first plurality of the multiple rows to a safe memory region, and a second plurality of the multiple rows to an unsafe memory region, wherein a row of the first plurality does not have a neighboring row in the first plurality. A ZebRAM prototype may be implemented on a computing device such as shown in Figs. 2a and 2c.

In an embodiment, both a memory mapper 450 and a memory allocator 412 are used. For example, memory mapper 450 may be implemented in hypervisor 405. For example, memory mapper 450 may determine which parts of the memory are considered safe, and which are not. Memory allocator 412 may run in a guest operating system. Memory allocator 412 may manage the guest ram, e.g., as allocated in a safe region.

Below, we describe a prototype implementation of ZebRAM on top of the Linux kernel. Our prototype protects virtual machines against Rowhammer attacks and comprises the following four components: the *Memory mapper 450,* the *Integrity Manager 420,* the *Swap Manager 432,* and the *Cache Manager 411,* as shown in Fig. 4. Our prototype implements the memory mapper in the hypervisor and the other three components in the guest OS. It is possible to implement all the components in the host to make ZebRAM guest-transparent. Further below, some alternative implementations and their associated trade-offs are discussed. Although a Linux prototype was used, the skilled person will be able to implement the solution on other types of operating systems, e.g., windows, macOS, and the like. An embodiment may also be implemented on operating systems that do not support swapping, e.g., some mobile phone operating systems; in that case swapping functionality may be ported, e.g., from Linux.

Some of the ZebRAM Prototype Components may be configured as follows:
**Memory mapper 450** implements the split of physical memory into a safe and unsafe region. One region contains all the even-numbered rows, while the other contains all the odd-numbered rows. Note that because hardware vendors do not publish the mapping of physical addresses to DRAM addresses, we need to reverse engineer this mapping following methodology established in prior work [22, 31].

Because Rowhammer attacks only affect directly neighboring rows, a Rowhammer attack in one region can only incur bit flips in the other region, as shown in Figs. 1b and 1c. In addition, ZebRAM supports the conservative option of increasing the number of guard rows to defend against Rowhammer attacks that target a victim row not directly adjacent to the aggressor row. However, our experience with a large number of vulnerable DRAM modules shows that with the correct translation of memory pages to DRAM locations, bit flips trigger exclusively in rows adjacent to a row that is hammered.

**Integrity Manager 420** protects the integrity of the unsafe region. To achieve this, it generates a hash for each page that is moved into the unsafe region and stores the hash in the safe region. For further robustness, the Integrity Manager implements software ECC to allow ZebRAM to correct (not just detect) bit flips in pages stored in the unsafe region.

**Swap Manager 432** uses the unsafe region to implement an efficient swap disk in memory, protected by the Integrity Manager and accessible only by the OS. Using the unsafe region as a swap space has the advantage that the OS will only access the slow, integrity-checked unsafe region when it runs out of fast safe memory. As with any swap disk, the OS uses efficient page replacement techniques to minimize access to it. To maximize utilization of the available memory, the Swap Manager also implements a compression engine that optionally compresses pages stored in the swap space.

Note that ZebRAM also supports configurations with a dedicated swap disk (such as a hard disk or SSD) in addition to the memory-based swap space. In this case, ZebRAM swap is prioritized above any other swap disks to maximize efficiency.

**Cache Manager 411** implements a fully associative cache that speeds up access to the swap space while simultaneously preventing Rowhammer attacks against safe rows by reducing the access frequency on memory rows in the unsafe region. The swap cache is faster than the swap disk because it is located in the safe region and does not require integrity checks or compression. Because attackers must clear the swap cache to be able to directly access rows in the unsafe region, the cache prevents attackers from efficiently hammering guard rows to induce bit flips in safe rows.

Because the cache layer sits in front of the swap space, pages swapped out by the OS are first stored in the cache, in uncompressed format. Only if the cache is full does the Cache Manager flush the *least-recently-added (LRA)* entry to the swap disk. The LRA strategy is important, because it ensures that attackers must clear the *entire* cache after every row access in the unsafe region.

The prototype ZebRAM was implemented in C on an Intel Haswell machine running Ubuntu 16.04 with kernel v4.4 on top a Qemu-KVM v2.11 hypervisor. Next we provide further details on the implementation various components in the ZebRAM prototype.

**Memory mapper:** To efficiently partition memory into guard rows and safe rows, we use *Second Level Address Translation (SLAT),* a hardware virtualization extension commonly available in commodity processors. To implement the Memory mapper component, we patched Qemu-KVM 's mmap function to expose the unsafe memory rows to the guest machine as a contiguous memory block starting at physical address 0x3ffe0000. We use a translation library similar to that of Throwhammer [27] for assigning memory pages to odd and even rows in the Memory mapper component.

**Integrity Manager:** The Integrity Manager and Cache Manager are implemented as part of the ZebRAM block device, and comprise 369 and 192 LoC, respectively. The Integrity Manager uses the fast lookup3 Jenkins Hash algorithm, implemented in mainline Linux as jhash2(), to hash swap pages, and keeps the hashes in a linear array stored in safe memory. It additionally uses an ECC derived from the extended Hamming(63,57) code [13], expurgated to have a message size an integer multiple of bytes. The obtained ECC is a block code, providing single error correction and double error detection (SEC-DED) for each individual (64-bit) memory word-functionally on par with hardware SEC-DED implementations.

**Swap Manager:** The Swap Manager is implemented as a Loadable Kernel Module (LKM) for the guest OS that maintains a stack containing the Page Frame Numbers (PFNs) of free pages in the swap space. It exposes the RAM-based swap disk as a readable and writable block device that we implemented by extending the zram compressed RAM block device commonly available in Linux distributions. We changed zram's zsmalloc slab memory allocator to only use pages from the Swap Manager 's stack of unsafe memory pages. To compress swap pages, we use the LZO algorithm also used by zram (see http://www.oberhumer.com/opensource/lzo/). The Swap Manager LKM contains 456 LoC while our modifications to zram and zsmalloc comprise 437 LoC.

**Cache Manager:** The Cache Manager implements the swap cache using a linear array to store cache entries and a radix tree that maps ZebRAM block device page indices to cache entries. By default, ZebRAM uses 2% of the safe region for the swap cache.

**Guest Modifications:** The guest OS is unchanged except for a minor modification that uses Linux's boot memory allocator API (alloc_bootmem_low_pages) to reserve the unsafe memory block as swap space at boot time. Our changes to Qemu-KVM comprise 2.6K lines of code (LoC), while the changes to the guest OS comprise only 4 LoC.

**Table 1: ZebRAM 's effectiveness defending against a ZebRAM -aware Rowhammer exploit**

| | 1 bit flip | 2 bit flips | Total | ZebRAM detection performance | |
|---|---|---|---|---|---|
| Run no. | in 64 bits | in 64 bits | bit flips | Detected bit flips | Corrected bit flips |
| 1 | 4,698 | 2 | 4,702 | 4,702 | 4,698 |
| 2 | 5,132 | 0 | 5,132 | 5,132 | 5,132 |
| 3 | 2,790 | 0 | 2,790 | 2,790 | 2,790 |
| 4 | 4,216 | 1 | 4,218 | 4,218 | 4,216 |
| 5 | 3,554 | 0 | 3,554 | 3,554 | 3,554 |

ZebRAM 's effectiveness in defending against traditional Rowhammer exploits was evaluated. Additionally, we show that ZebRAM successfully defends even against more advanced ZebRAM -aware Rowhammer exploits. We evaluated all attacks on a Haswell i7-4790 host machine with 16GB RAM running our ZebRAM -based Qemu-KVM hypervisor on Ubuntu 16.04 64-bit. The hypervisor runs a guest machine with 4GB RAM and Ubuntu 16.04 64-bit with kernel v4.4, containing all necessary ZebRAM patches and LKMs.

Under ZebRAM 's memory model, traditional Rowhammer exploits on system memory only hammer the safe region, and can therefore trigger bit flips only in the integrity-checked unsafe region by construction. We tested the most popular real-world Rowhammer exploit variants to confirm that ZebRAM correctly detects these integrity violations.

In particular, we ran the single-sided Rowhammer exploit published by Google's project Zero (https://github.com/google/rowhammer-test) and the double-sided exploit published by Gruss et al. (see https://github.com/IAIK/rowhammerjs/tree/master/native) on our testbed for a period of 24 hours. During this period the single-sided Rowhammer exploit induced two bit flips in the unsafe region, while the double-sided exploit failed to produce any bit flips. ZebRAM successfully detected and corrected all of the induced bit flips.

The double-sided Rowhammer exploit failed due to ZebRAM 's changes in the DRAM geometry, alternating safe rows with unsafe rows. Conventional double-sided exploits attempt to exploit a victim row by hammering the rows and below and above it, respectively. Under ZebRAM, this fails because the hammered rows are not really adjacent to the victim row, but remapped to be separated from it by unsafe rows. Unaware of ZebRAM, the exploit thinks otherwise based on the information gathered from the Linux' pagemap-due to the virtualization-based remapping layer-and essentially behaves like an unoptimized single-sided exploit. Fixing this requires a ZebRAM -aware exploit that hammers two consecutive rows in the safe region to induce a bit flip in the unsafe region. As described next, we developed such an exploit and tested ZebRAM 's ability to thwart it.

To further demonstrate the effectiveness of ZebRAM, we developed a ZebRAM -aware double-sided Rowhammer exploit. This section explains how the exploit attempts to hammer both the safe and unsafe regions, showing that ZebRAM detects and corrects all the induced bit flips.

To induce bit flips in the unsafe region (where the swap space is kept), we modified the double-sided Rowhammer exploit published by Gruss et al. [12] to hammer every pair of two consecutive DRAM rows in the safe region (assuming the attacker is armed with an ideal ZebRAM -aware memory layout oracle) and ran the exploit five times, each time for 6 hours. As Table 1 shows, the first exploit run induced a total of 4,702 bit flips in the swap space, with 4,698 occurrences of a single bit flip in a 64-bit data word and 2 occurrences of a double bit flip in a 64-bit word. ZebRAM successfully corrected all 4,698 single bit flips and detected the double bit flips. As shown in Table 1, the other exploit runs produced similar results, with no bit flips going undetected. Note that ZebRAM can also detect more than two errors per 64-bit word due to its combined use of ECC and hashing, although our experiments produced no such cases.

In addition to hammering safe rows, attackers may also attempt to hammer unsafe rows to induce bit flips in the safe region. To achieve this, an attacker must trigger rapid writes or reads of pages in the swap space. We modified the double-sided Rowhammer exploit to attempt this by opening the swap space with the *open* system call with the *O_DIRECT* flag, followed by repeated *preadv* system calls to directly read from the ZebRAM swap disk (bypassing the Linux page cache).

Because the swap disk only supports page-granular reads, the exploit must read an entire page on each access. Reading a ZebRAM swap page results in at least two memory copies; first to the kernel block I/O buffer, and next to user space. The exploit evicts the ZebRAM swap cache before each swap disk read to ensure that it accesses rows in the swap disk rather than in the cache (which is in the safe region). After each page read, we use a clflush instruction to evict the cacheline we use for hammering purposes. Note that this makes the exploit's job easier than it would be in a real attack scenario, where the exploit cannot use clflush because the attacker does not own the swap memory. A real attack would require walking an entire cache eviction buffer after each read from the swap disk.

We ran the exploit for 24 hours, during which time the exploit failed to trigger any bit flips. This demonstrates that the slow access frequency of the swap space-due to its page granularity, integrity checking, and the swap cache layer-successfully prevents Rowhammer attacks against the safe region.

To further verify the reliability of our approach, we re-tested our exploit with the swap disk's cache layer, compression engine, and integrity checking modules disabled, thus providing overly optimistic access speeds (and security guarantees) to the swap space for the Rowhammer exploit. Even in this scenario, the page-granular read enforcement of the swap device alone proved sufficient to prevent any bit flips. Our time measurements using rdtsc show that even in this optimistic scenario, memory dereferences in the swap space take 2,435 CPU cycles, as opposed to 200 CPU cycles in the safe region, removing any possibility of a successful Rowhammer attack against the safe region.

ZebRAM 's performance was measured and compared to an unprotected system under varying workloads. We test several different kinds of applications, commonly considered for evaluation by existing systems security defenses. First, we test ZebRAM on the SPEC CPU2006 benchmark suite [14] to measure its performance for CPU-intensive applications. We also benchmark ZebRAM the popular nginx and Apache web servers, as well as the redis in-memory key-value store. Additionally, we present microbenchmark results to better understand the contributing factors to ZebRAM 's overhead.

Similar to our security evaluation, we conduct our performance evaluation on a Haswell i7-4790 machine with 16GB RAM running Ubuntu 16.04 64-bit with our modified Qemu-KVM hypervisor. We run the ZebRAM modules and the benchmarked applications (including tests with ZebRAM disabled) in an Ubuntu 16.04 guest VM with 4GB of RAM and kernel v4.4. In the baseline measurements, the guest VM has direct access to all its memory, while in the ZebRAM performance measurements half of the memory is dedicated to the ZebRAM swap space. In all reported memory usage figures we include memory used by the Integrity Manager and Cache Manager components of ZebRAM. For our tests of server applications, we use a separate Skylake i7-6700K machine as the client. This machine has 16GB RAM and is linked to the ZebRAM machine via a 100Gbit/s link. We repeat all our experiments multiple times and observe marginal deviations across runs.

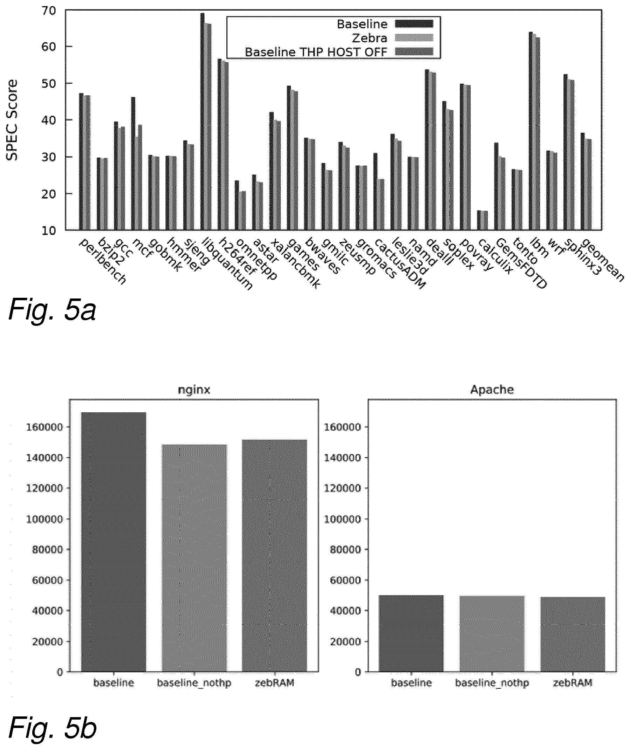

**SPEC 2006:** We compare performance scores of the SPEC 2006 benchmark suite in three different setups: baseline, baseline with Transparent Huge Pages (THP) disabled, and ZebRAM. ZebRAM splits memory using a zebra pattern, so the OS can no longer benefit from huge pages. Fig. 5a shows that ZebRAM has the same performance as the baseline experiment where THP is disabled. That is, 5% performance overhead (geometric mean) compared to the baseline with THP enabled.

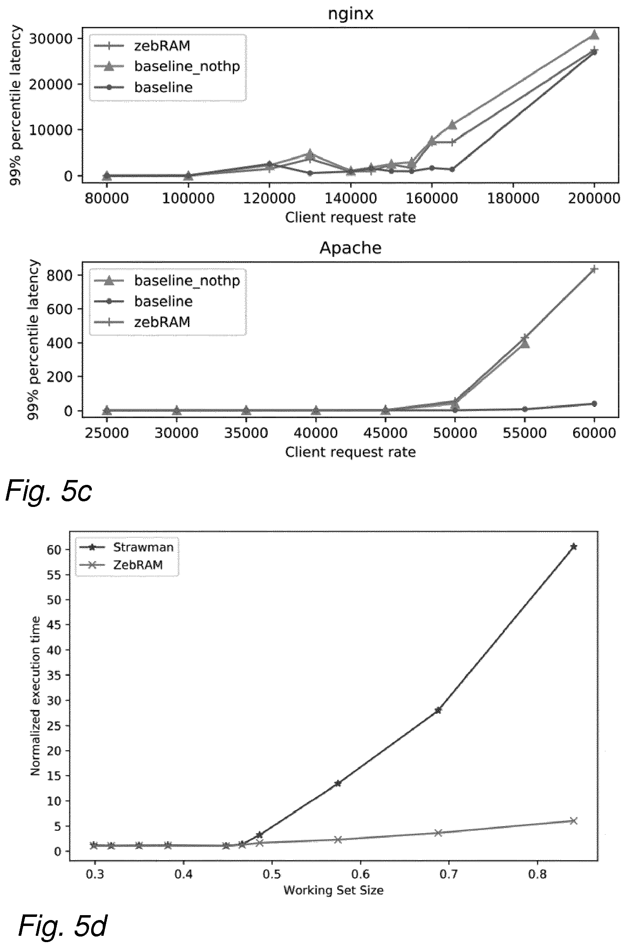

**Web servers:** We evaluate two popular web servers: nginx (1.10.3) and Apache (2.4.18). We configure the virtual machine to use 4 VCPUs. To generate load to the web servers we use the wrk2[32] benchmarking tool, retrieving a default static HTML page of 240 characters. We setup nginx to use 4 workers, while we setup Apache with the prefork module, spawning a new worker process for every new connection. We also increase the number of maximum clients allowed by Apache from 150 to 500. We configured the wrk2 tool to use 32 parallel keep-alive connections across 8 threads. When measuring the throughput, we check that CPU is saturated in the server VM. We discard the results of 3 warmup rounds, repeat a one-minute run 11 times, and report the median across runs. Our results for the throughput are shown in Fig. 5b. Besides throughput, we want to measure ZebRAM 's latency impact. We use wrk2 to throttle the load on the server (using the rate parameter) and report the 99% percentile latency as a function of the client request rate in Fig. 5c.

The baseline achieves 170k and 50k requests per second on Nginx and Apache respectively. ZebRAM reaches 150k and 49k, on par with baseline_nothp: 149k and 49k-the small measured speedup is well within the noise of modern architectures [20]. Before saturation, the results show that ZebRAM imposes no overhead on the 99% percentile latency. After then, both ZebRAM and baseline_nothp show a similar trend with linearly higher 99% percentile response time.

Overall, ZebRAM 's performance impact on both web servers and SPEC benchmarks is low and mostly due to the inability to efficiently use Linux' THP support. This is expected, since as long as the working set can comfortably fit in the safe region (e.g., around 400MB for our web server experiments) the unsafe memory management overhead is completely masked. We isolate and study such overhead in more details in the following.

**Microbenchmarks:** To drill down the overhead of each single feature of ZebRAM, we measure the latency of swapping in a page from the ZebRAM device under different configurations. To measure the latency, we use a small binary that sequentially writes on every page of a large eviction buffer in a loop. This ensures that, between two accesses to the same page, we touch the entire buffer, evicting that page from memory. To be sure that Linux swaps in just one page for every access, we set the page-cluster configuration parameter to 0. In this experiment, two components interact with ZebRAM : our binary triggers swap-in events from the ZebRAM device while the kswapd kernel thread swaps pages to the ZebRAM device to free memory. The interaction between them is completely different if the binary uses exclusively loads to stress the memory. This is because the kernel would optimize out unnecessary flushes to swap and batch together TLB invalidations. Hence, we choose to focus on stores to study the performance in the worst-case scenario and because read-only workloads are less common than mixed workloads.

We reserve a core exclusively for the binary so that kswapd does not (directly) steal CPU cycles from it. We measure 1,000,000 accesses for each different configuration. Table 2 presents our results. We also run the binary in a loop and profile its execution with the perf Linux tool to measure the time spent in different functions. Due to function inlining, it is not always trivial to map a symbol to a particular feature. Nevertheless, perf can provide insights into the overhead at a fine granularity. In the first configuration, we disable the all features of ZebRAM and perform only memory copies into the ZebRAM device. As the copy operation is fast, the perf tool reports that just 4.28% percent of CPU cycles are spent copying. Interestingly, 47% of CPU cycles are spent serving Inter Process Interrupts from other cores. This is because, while we are swapping in, kswapd on another core is busy freeing memory. For this purpose, kswapd needs to unmap pages that are on their way to be swapped out from the process's page tables. This introduces TLB shootdowns (and IPIs) to invalidate other cores' TLB stale entries. It is important to notice that the faster we swap in pages, the faster kswapd needs to free memory. This unfortunately results in a negative feedback loop that represent one of the major sources of overhead when the large number of swap-in events continuously force kswapd to wake up.

Adding hashing (jhash) on top of the previous configuration shows an increase in latency, which is also reflected in the CPU cycles breakdown. The perf tool reports that 10% of CPU cycles are spent swapping in pages (copy + hashing), while serving IPIs accounts for 50%. Adding the cache on top of jhash marginally increases the latency. In this scenario, the IPI routine uses 40% of CPU and about 20% of CPU cycles are spent swapping in from the ZebRAM device. Adding compression significantly increases latency. The perf tool reports 43.94% of CPU cycles are spent in the decompression routine and 27% in serving IPI requests for other cores and less than 2% in hashing and copying. This confirms the presence of the swap-in/swap-out feedback loop under high memory pressure.

**Table 2: Page swap-in latency from the ZebRAM device**

| **Configuration** | **median** | **90% q** | **99% q** |
|---|---|---|---|
| copy | 2,362.0 | 4,107.0 | 8,167.0 |
| jhash | 4,647.0 | 5,589.0 | 9,417.0 |
| cache_jhash | 4,403.0 | 6,144.0 | 1,0161.0 |
| cache_comp_jhash | 9,015.0 | 14,080.0 | 18,920.0 |
| cache_comp_jhash_h57 | 8,757.0 | 14,110.0 | 19,179.0 |

As expected, ZebRAM 's overheads are mostly associated to swap-in/swap-out operations, which are masked when the working set can fit in the safe region but naturally become more prominent as we grow the working set. In this section, we want to evaluate the impact of supporting increasingly larger working sets compared to a more traditional swap implementation. For this purpose, we evaluate the performance of a key-values store in three different setups: ZebRAM, baseline, and strawman. The strawman setup uses just one of the two domains in which ZebRAM splits the RAM and swaps to a fast SSD disk when the memory used by the OS does not fit into it. We use YCSB[7] to generate load and induce a target working set size against a redis (4.0.8) key-value store. We setup YCSB to use 1KB objects and perform a 90/10 read/write operations ratio. Each test runs for 20 seconds and, for each configuration, we discard the results of 3 warmup rounds and report the median across 11 runs. We configure YCSB to access the dataset key space uniformly and we measure the throughput at saturation for different data set sizes.

Fig. 5d depicts the reported normalized execution time as a function of the working set size (in percentage compared to the total RAM size). As shown in the figure, when the working set size is small enough (e.g., 44%) the OS hardly reclaims any memory, hence the unsafe region remains unutilized and the normalized execution time is only 1.08x for Strawman and 1.07x for ZebRAM. As we increase the working set size, the OS starts reclaiming pages and the normalized execution time increases accordingly. However, the increase is much gentler for ZebRAM compared to Strawman and the gap becomes more significant for larger working set sizes. For instance, for a fairly large working set size (e.g., 70%), ZebRAM can still sustain a roughly 3x normalized execution time compared to Strawman's 28x.

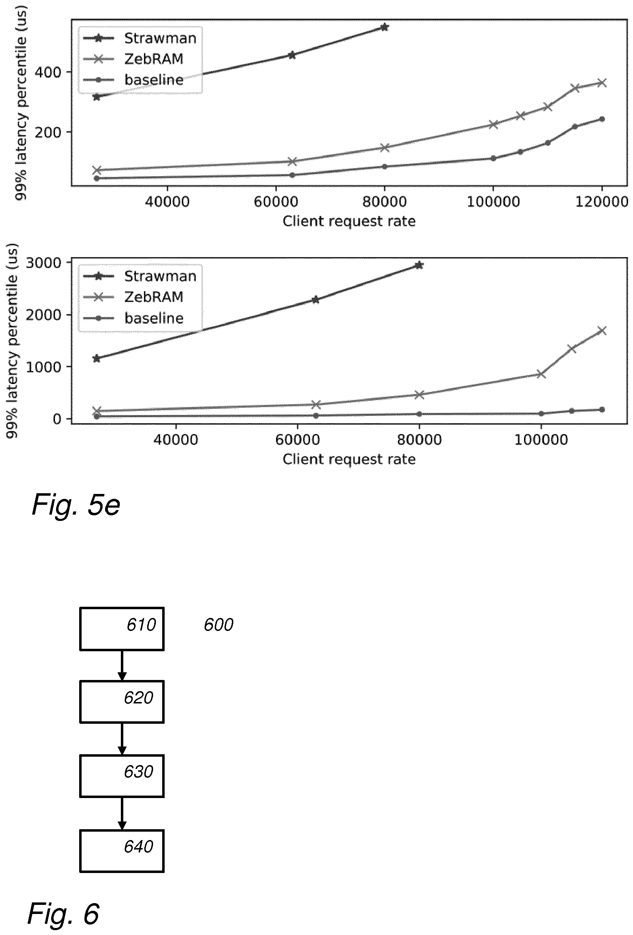

To study the impact of ZebRAM on latency, we fix the working set size to 50% and 70% of the total RAM and repeat the same experiment while varying the load on the server. Fig. 5e presents our results for the 99% latency percentile. At 50%, the ZebRAM and baseline results follow the same trend. ZebRAM reports a 99% latency percentile of 192us for client request rates below 110,000, compared to 315us for Strawman. At 70%, the gap is again more prominent, with ZebRAM reporting a 99% latency percentile of 274us and Strawman reporting 2,945us.

Overall, ZebRAM can more gracefully reduce performance for larger working sets compared to a traditional (Strawman) swap implementation, thanks to its ability to use an in-memory cache even if integrity checks are used to further mitigate Rowhammer. As our experiments demonstrate, given a target performance budget, ZebRAM can support much larger working sets compared to the Strawman implementation, while providing a strong defense against arbitrary Rowhammer attacks. This is unlike the Strawman implementation, which optimistically provides no protection against similar bit flip-based attacks. Unfortunately, such attacks, which have been long-known for DRAM [17], have recently started to target flash memory as well [6, 18].

Alternative ZebRAM implementations have different performance tradeoffs. Because the ZebRAM prototype relies on the hypervisor to implement safe/unsafe memory separation, and on a cooperating guest kernel for swap management, both host and guest need modifications. In addition, the guest physical address space may map highly non-contiguously to the host address space, preventing the use of huge pages. The guest modifications, however, are small and self-contained, do not touch the core memory management implementation and are therefore highly compatible with mainline and third party LKMs.

Several alternative ZebRAM implementations are possible. Here, we compare our ZebRAM implementation to alternative hardware-based, OS-based, and guest-transparent virtualization-based implementations.

Implementing ZebRAM at the hardware level may use a physical-to-DRAM address mapping where sets of odd and even rows are mapped to convenient physical address ranges, for instance an even lower-half and an odd upper-half. This can be achieved with by a fully programmable memory controller, or implemented as a configurable feature in existing designs. With such a mapping in place, the OS can trivially separate memory into safe and unsafe regions. In this model, the Swap Manager, Cache Manager and Integrity Manager are implemented as LKMs just as in the implementation from Section 5. In contrast to other implementations, a hardware implementation uses no hypervisor, allows the OS to make use of (transparent) huge pages and requires minimal modifications to the memory management subsystem. A hardware-supported ZebRAM implementation has performance benefits; for example, it may be implemented by adding the required features to conventional memory controllers.

The ZebRAM prototype described above implements the Memory mapper as part of a hypervisor. A hypervisor has the advantage that it may produce a contiguous physical address space, so that huge pages may be used. Alternatively, the Memory mapper can be implemented as part of the bootloader, using Linux's boot memory allocator to reserve the unsafe region for use as swap space. This solution obviates the use of a hypervisor.

The ZebRAM implementation described above requires minor changes to the guest OS, it is also possible to implement a virtualization-based variant of ZebRAM that is completely transparent to the guest. This may entail implementing the ZebRAM swap disk device in the host and then exposing the disk to the guest OS as a normal block device to which it can swap out. The drawback of this approach is that it degrades performance by having the hypervisor interposed between the guest OS and unsafe memory for each access to the swap device, a problem which does not occur in our current implementation. The clear advantage to this approach is that it is completely guest-agnostic: guest kernels other than Linux, including legacy and proprietary ones are equally well protected, enabling existing VM deployments to be near-seamlessly transitioned over to a Rowhammer -safe environment.

ZebRAM embodiments provide the first comprehensive software defense against all forms of Rowhammer. ZebRAM uses guard rows to isolate all memory rows containing user or kernel data, protecting these from Rowhammer -induced bit flips. Moreover, ZebRAM implements an efficient integrity-checked memory-based swap disk to utilize the memory sacrificed to the guard rows. Our evaluation shows ZebRAM to be a strong defense able to use all available memory at a cost that is a function of the workload.

The various embodiments of the computing device including the ZebRAM embodiments may comprise a communication interface which may be selected from various alternatives. For example, the interface may be a network interface to a local or wide area network, e.g., the Internet, a storage interface to an internal or external data storage, a keyboard, an application interface (API), etc. The device may have a user interface, which may include well-known elements such as one or more buttons, a keyboard, display, touch screen, etc. The user interface may be arranged for accommodating user interaction for performing actions such as booting up the device, starting an operating system including a host or guest operating system, starting and/or using an application etc. The device may comprise storage which may be implemented as an electronic memory, say a flash memory, or magnetic memory, say hard disk or the like. Storage may comprise multiple discrete memories together making up the storage. The storage may comprise memory vulnerable to rowhammer, but may also comprise memory not vulnerable to row hammer, e.g., not showing an increased bit error rate with repeated access to neighboring rows. At least the vulnerable parts may be protected as indicated herein.

Typically, the device 100 and the zebram embodiments each comprise a microprocessor which executes appropriate software stored at the device; for example, that software may have been downloaded and/or stored in a corresponding memory, e.g., a volatile memory such as RAM or a non-volatile memory such as Flash. The devices may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL etc.

In an embodiment, the device comprises a memory circuit, a memory mapping circuit, and a processor circuit. The device 100 may comprise additional circuits, e.g., an access circuit, a swap cache circuit, etc. The circuits implement the corresponding units described herein. The circuits may be a processor circuit and storage circuit, the processor circuit executing instructions represented electronically in the storage circuits. The mapper circuit may be part of the processor circuit.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

Fig. 6 schematically shows an example of a memory management method (600) for a computing device. The method 600 comprising
- providing (610) a volatile memory comprising multiple rows of memory cells, each row of the multiple rows of memory cells having a neighboring row,
- mapping (620) a first plurality of the multiple rows to a safe memory region, and a second plurality of the multiple rows to an unsafe memory region, wherein a row of the first plurality does not have a neighboring row in the first plurality,
- allocating (630) pages of the safe region as working memory for one or more applications running on the operating system and lowering an access frequency for the unsafe region to below an access frequency for the safe region.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. Moreover, a given step may not have finished completely before a next step is started.

Embodiments of the method may be executed using software, which comprises instructions for causing a processor system to perform method 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

Fig. 7a shows a computer readable medium 1000 having a writable part 1010 comprising a computer program 1020, the computer program 1020 comprising instructions for causing a processor system to perform a memory management, e.g., a swapping method, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of memory management, e.g., swapping.

Fig. 7b shows in a schematic representation of a processor system 1140 according to an embodiment of a computing device. The processor system comprises one or more integrated circuits 1110. The architecture of the one or more integrated circuits 1110 is schematically shown in Fig. 7b. Circuit 1110 comprises a processing unit 1120, e.g., a CPU, for running computer program components to execute a Method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the computing device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computing device comprising
- a volatile memory comprising multiple rows of memory cells, each row of the multiple rows of memory cells having a neighboring row,
- a memory mapper configured to map a first plurality of the multiple rows to a safe memory region, and a second plurality of the multiple rows to an unsafe memory region, wherein a row of the first plurality does not have a neighboring row in the first plurality,
- an operating system configured to allocate pages of the safe region as working memory for one or more applications running on the operating system, and to lower an access frequency for the unsafe region to below an access frequency for the safe region.

2. A computing device as in Claim 1, wherein the operating system comprises an access unit, the access being configured to access the unsafe region and to enforce said lower access frequency.

3. A computing device as in any one of the preceding claims, wherein the operating system is configured to allocate pages of the unsafe region as swap space for swapping-out pages of the working memory.

4. A computing device as in Claim 3, wherein the operating system is configured with page replacement policies to determine which pages of the safe region are evicted to the swap space in the unsafe region.

5. A computing device as in any one of the preceding claims, wherein the operating system is configured to
- compute integrity information for a page when transferring the page from the safe region to the unsafe region, and storing the integrity information, and
- retrieve the integrity information for a page when transferring the page from the unsafe region to the safe region, and verifying the integrity information.

6. A computing device as in Claim 5, wherein the integrity information comprises error correction information of the page, the operating system is configured to
- apply the error correction information to a page when transferring the page from the unsafe region to the safe region.

7. A computing device as in any one of claims 3-6, wherein the operating system allocates a swap cache, the operating system being configured to
- select a page of the safe region for swapping-out to the unsafe region,
- storing the selected page in the swap cache,
- if the swap cache is full, swapping-out the least recently added page from the swap cache to the unsafe region.

8. A computing device as in any one of the preceding claims, wherein even rows of the memory are mapped to one of the safe region and the unsafe region, and wherein the odd rows of the memory are mapped to the other of the safe region and the unsafe region.

9. A computing device as in any one of the preceding claims, wherein the memory mapper is configured to map the safe region and/or the unsafe region to a contiguous address space.

10. A computing device as in any one of the preceding claims, wherein the operating system is configured to
- compress a page when transferring the page from the safe region to the unsafe region,
- decompress a page when transferring the page from the unsafe region to the safe region.

11. A computing device as in any one of claims 3-10, comprising a swap interface configured to access a further swap space, the operating system being configured to prioritize the swap space in the unsafe region over the further swap space.

12. A computing device as in any one of claims 3-11, wherein the operating system is configured to access the swap space only with page-granular reads during caching operation.

13. A computing device as in any one of the preceding claim wherein the operating system comprises a host operating system and a guest operating system, the guest operating system being configured to use the unsafe region as swap space.

14. A computing device as any one of the preceding claims, wherein the host operating system exposes at least part of the unsafe region to the guest operating system as a contiguous memory block and/or as a block device.

15. A computing device as in any one of the preceding claims wherein the operating system allows access to the safe region without interposition.

16. A computing device as in any one of the preceding claims, comprising
- a storage interface configured to access operating system code and/or memory mapper code,
- a processor configured to execute operating system code and/or the memory mapper code.

17. A memory management method (600) for a computing device, the method comprising
- providing (610) a volatile memory comprising multiple rows of memory cells, each row of the multiple rows of memory cells having a neighboring row,
- mapping (620) a first plurality of the multiple rows to a safe memory region, and a second plurality of the multiple rows to an unsafe memory region, wherein a row of the first plurality does not have a neighboring row in the first plurality,
- allocating (630) pages of the safe region as working memory for one or more applications running on the operating system and lowering an access frequency for the unsafe region to below an access frequency for the safe region.

18. A computer readable medium (1000) comprising transitory or non-transitory data (1020) representing instructions to cause a processor system to perform the method according to claim 17.
